# EUROPEAN PATENT APPLICATION

(11) **EP 2 060 384 A1**
(43) Date of publication of application: **20.05.2009**
(21) Application number: 08018004.5
(22) Date of filing: 14.10.2008
(51) Int. Cl.: B29C 53/60

(54) **Filament winding apparatus**

(30) Priority: 15.11.2007 JP 2007296693
(71) Applicant: Murata Machinery, Ltd., Kyoto 601 (JP)
(72) Inventor: Uozumi, Tadashi, Kyoto-shi, Kyoto 612 8686 (JP); Tanigawa, Motohiro, Kyoto-shi, Kyoto 612 8686 (JP)
(74) Representative: Liedl, Christine

(57) **Abstract**

A filament winding apparatus capable of efficiently performing the winding process of a fiber bundle with respect to a mandrel (M) in a short period of time, and orderly performing the winding of the fiber bundle with respect to a dome part (m2) is provided. A supporting board (2) which supports the mandrel (M), and a helical winding head which supplies and guides the fiber bundle towards the mandrel are arranged. The helical winding head (21) includes a guide ring (27), a group of guide tubes (28) radially arranged on a circumferential surface of the guide ring, and a tube operation mechanism which reciprocates the guide tube along a tube axis center direction. The guide tube is operated to move closer towards a circumferential surface of the dome part with the tube operation mechanism when the guide tube is facing the dome part (m2) of the mandrel (M). Therefore, the distance between the winding position of the fiber bundle and the guide tube at the dome part can be reduced, and the fiber bundle can be orderly wound according to an appropriate winding trajectory (Fig. 1).

## Description

### BACKGROUND OF THE INVENTION

### 1. Field of the Invention

The present invention relates to a filament winding apparatus equipped with a helical winding device, and a modified form of a supply structure of a fiber bundle configured by a guide ring and a guide tube arranged in a ring thereof.

### 2. Description of the Related Art

When forming a pressure container through a filament winding method, the pressure container is formed by a hollow mandrel and a reinforcement layer wound around a circumferential surface of the mandrel. In most cases, the mandrel integrally includes a cylindrical part at the middle and a dome part continuing to both left and right ends of the cylindrical part, where the fiber bundle is wound around the cylindrical part and the left and right dome parts respectively to form the reinforcement layer. The fiber bundle is supplied to the mandrel by way of numerous guide bodies as seen in the winding apparatus of Japanese Laid-Open Patent Publication No. 2004-314550 and the like. The guide body is arranged on an array head which slides in a reciprocating manner along an axis center of the mandrel, and is arranged in a dispersed manner around the mandrel. The fiber bundle moved and guided by the guide body is supplied to the mandrel by way of a fiber-spreading ring arranged concentric with the mandrel. During the operation of the winding apparatus, the array head is reciprocated while rotatably driving the mandrel, so that the fiber bundle supplied from the guide tube is wound around the mandrel thereby forming the reinforcement layer.

With regards to the present invention, having the supply position of the fiber bundle with respect to the mandrel changeable is known in Japanese Laid-Open Patent Publication No. 2005-154908. Here, the supply position of the fiber bundle is changed by rotationally displacing a yarn feeding unit between a case of winding the fiber bundle around the cylindrical part of the mandrel and a case of winding the fiber bundle around the dome part. The yarn feeding unit is configured by a supporting part supported in a freely rotating manner, an exit guide arranged at a distal end of the supporting part, and the like, where the supply position of the fiber bundle can be changed by the rotationally displaced amount of the exit guide. Similarly, it is known to displace a feed eye which supplies and guides the fiber bundle towards the mandrel in a radius direction of the mandrel at the dome part of the mandrel (see Japanese Laid-Open Patent Publication No. 2002-46940). In either case, the displacement amount of the exit guide and the feed eye is only a very limited amount.

### SUMMARY OF THE INVENTION

The winding apparatuses according to Japanese Laid-Open Patent Publication No. 2005-154908 and Japanese Laid-Open Patent Publication No. 2002-46940 wind the fiber bundle around a circumferential surface of a mandrel by the cooperative action of the rotatably driven mandrel, and one yarn supply unit (or feed eye) reciprocated along the axis center of the mandrel. Thus, a great amount of time is required to repeatedly perform hoop winding and helical winding to form the reinforcement layer, and the pressure container and the like cannot be efficiently formed. According to the filament winding apparatus in a mode of simultaneously supplying a group of fiber bundle to the mandrel as in Japanese Laid-Open Patent Publication No. 2004-314550, the winding process can be performed in a short period of time, and the pressure container and the like can be efficiently manufactured by that much.

In the winding apparatus of Japanese Laid-Open Patent Publication No. 2004-314550, however, the supply position of the fiber bundle with respect to the mandrel is always constant for the cylindrical part and for the dome part since the fiber bundle is supplied to the mandrel by way of the fiber-spreading ring. Thus, it becomes difficult to orderly wind the group of fiber bundle when winding the fiber bundle around the dome part. This is because at the semispherical dome part, the diameter of the mandrel gradually becomes smaller towards the mouth part, and the winding trajectory of the fiber bundle tends to shift to the mouth part side.

It is an object of the present invention to provide a filament winding apparatus capable of efficiently performing the winding process of the fiber bundle with respect to the mandrel in a short period of time, and orderly performing the winding of the fiber with respect to the dome part with the supply position of the fiber bundle changed between the cylindrical part and the dome part of the mandrel.

In order to overcome the problems described above, the filament winding apparatus of the present invention includes a supporting board which supports a mandrel, and a helical winding head which supplies and guides a fiber bundle towards the mandrel. The helical winding head includes a guide ring concentrically supported at a periphery of the mandrel, a group of guide tubes radially arranged along a circumferential direction of the guide ring, and a tube operation mechanism which reciprocates the guide tube along a tube axis center direction. The guide tube is operated to move closer towards a circumferential surface of the dome part with the tube operation mechanism when the guide tube is facing the dome part of the mandrel.

A movement trajectory upon the guide tube being operated to move closer to the circumferential surface of the dome part with the tube operation mechanism is set to a curved line form along an outer contour line of the dome part of the mandrel.

A circular opening allowing reciprocating movement of the mandrel is formed in a fixed frame arranged upstanding and fixed on a mount, the guide ring being fixed to a circumferential edge wall of the opening. A tube holder arranged on the guide tube is supported in a freely reciprocating sliding manner by a guide groove formed in the guide ring. The tube operation mechanism is arranged between the fixed frame and the tube holder.

The tube operation mechanism is configured by including a rack arranged on the tube holder, a pinion gearing with the rack, a power transmission mechanism which transmits a rotational power of a motor to a group of pinions, and a control circuit which controls a drive state of the motor.

In the present invention, the helical winding head is configured by the guide ring, the group of guide tubes arranged in the circumferential direction of the guide ring, the tube operation mechanism which reciprocates the guide tube, and the like, and the winding process is performed while simultaneously supplying the group of fiber bundles to the mandrel. When the guide tube is facing the dome part of the mandrel, the guide tube is operated to move closer towards the circumferential surface of the dome part with the tube operation mechanism to supply the fiber bundle in the vicinity of the circumferential surface of the dome part. Thus, when the guide tube is moved closer and the fiber bundle is supplied in the vicinity of the circumferential surface of the dome part, the distance between the winding position of the fiber bundle and the guide tube at the dome part can be reduced, and thus the fiber bundle can be orderly wound according to an appropriate winding trajectory. Therefore, according to the filament winding apparatus of the present invention, the winding of the fiber bundle with respect to the dome part is orderly performed and high quality reinforcement layer is formed while efficiently performing the winding process of the fiber bundle with respect to the mandrel.

The guide tube can be projected and retreated while matching the change in shape of the dome part by setting the movement trajectory of the guide tube when being operated to move closer with the tube operation mechanism to the curved line form along the outer contour line of the dome part of the mandrel. The spacing between the guide tube and the dome part at the dome part is always set constant, and the winding process of the fiber bundle at the dome part can be further appropriately performed. When changing the movement trajectory of the guide tube to a linear form, the spacing between the guide tube and the dome part cannot be avoided from continuously changing, and the winding position of the fiber bundles tends to easily shift.

The peripheral structure of the guide tube can be simplified while avoiding equipments from being arranged in a concentrated manner at the periphery of the guide tube by supporting the tube holder integral with the guide tube in a freely sliding manner by the guide groove of the guide ring, and arranging the tube operation mechanism between the fixed frame and the tube holder. For instance, the peripheral structure of the guide tube can be simplified and the concentration of equipments can be inhibited by arranging the tube operation mechanism in a dispersed manner using the surface wall of the fixed frame. If the peripheral structure of the guide tube is simplified, tasks such as setting and replacing of the fiber bundle can be easily performed without being disturbed by the equipments.

According to the tube operation mechanism configured by the rack arranged on the tube holder, the pinion which reciprocates the rack, the power transmission mechanism which transmits the motor power to the pinion, and the like, the group of guide tubes can be projected and retreated all together in synchronization to change the supply position of the fiber bundle. Therefore, the winding process of the fiber is further orderly performed to obtain a higher quality reinforcement layer without variation in the fiber bundle supply position at the individual guide tube.
Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

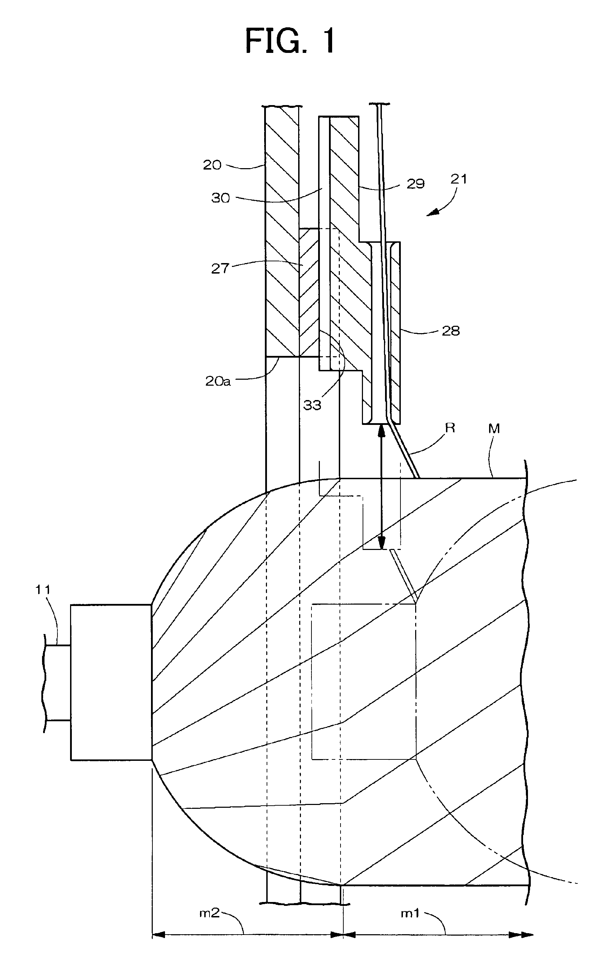

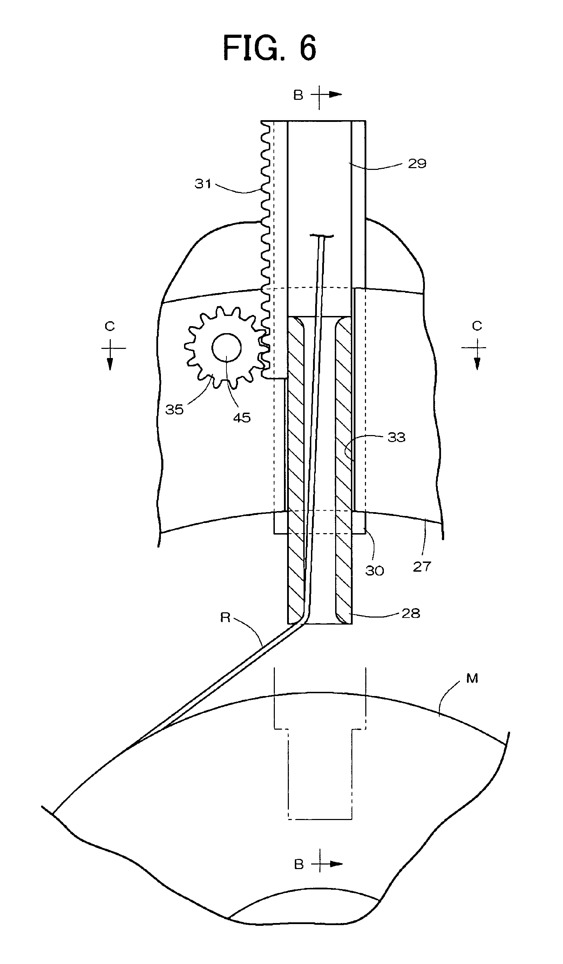

[0035] Fig. 1 is a cross-sectional view taken along line B-B in Fig. 6 showing a schematic structure of a helical winding head;
Fig. 2 is a front view of a filament winding apparatus;
Fig. 3 is a plan view of the filament winding apparatus;
Fig. 4 is a cross-sectional view taken along line A-A in Fig. 3;
Fig. 5 is a longitudinal section front view showing a tube operation mechanism;
Fig. 6 is a longitudinal section side view showing the tube operation mechanism;
Fig. 7 is a cross-sectional view taken along line C-C in Fig. 6;
Fig. 8 is a side view schematically showing a power transmission mechanism;
Fig. 9 is a longitudinal section front view showing a state in which a guide tube is proximate to a dome part;
Fig. 10 is a longitudinal section front view showing another example of the tube operation mechanism; and
Fig. 11 is a longitudinal section front view showing another further example of the tube operation mechanism.

### DETAILED DESCRIPTION OF PREFERRED EMBODIMENTS

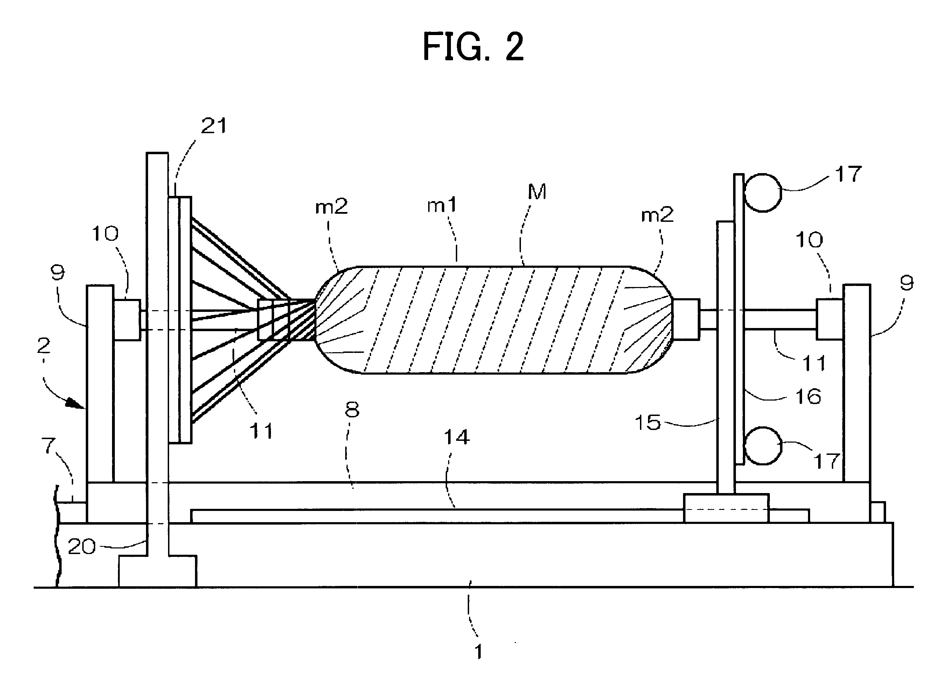

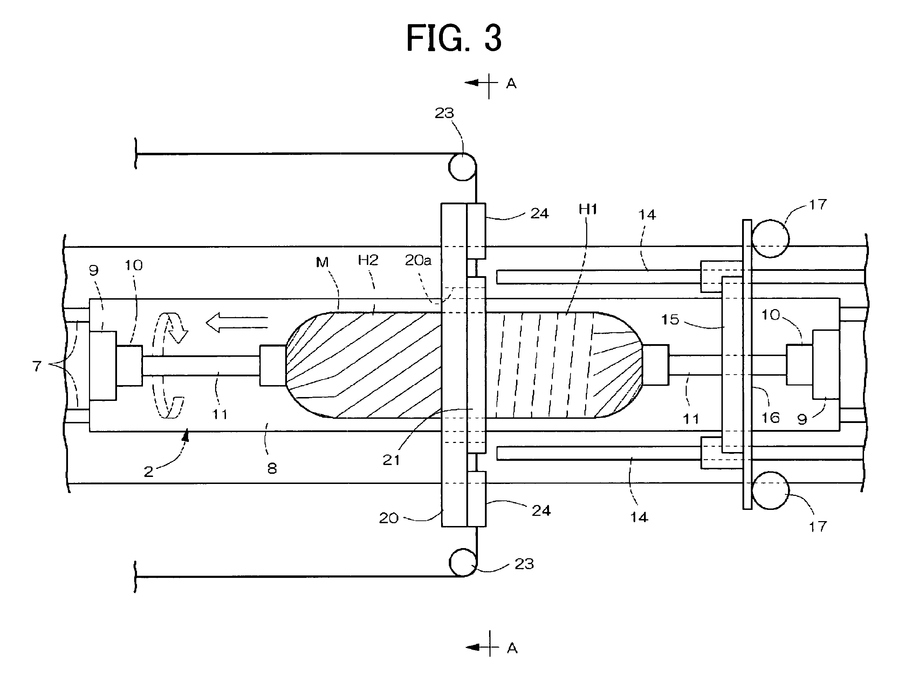

(Example) Figs. 1 to 9 show an example of a filament winding apparatus (hereinafter simply referred to as winding apparatus) according to the present invention. In Figs. 2 and 3, the winding apparatus is configured by a fiber bundle supply structure (not illustrated) and a winding device. The winding device is configured by a supporting board 2 which is arranged on an upper part of a mount 1 long in a left and right direction and which supports a mandrel M; a hoop winding device; a helical winding device; a mandrel replacing device (not illustrated); and the like. The supporting board 2 and the hoop winding device are driven in a reciprocating manner along a longitudinal direction of the mount 1 with a drive mechanism (not illustrated). The helical winding device is arranged at a central position of the mount 1, and is provided to feed and guide a fiber bundle R fed from a group of creels supported by the fiber bundle supply structure to the mandrel M.

The mandrel M in a case where the final product is a pressure container is made of a metal container including high strength aluminum material, stainless material, or the like. The mandrel M is sometimes made with a plastic container if necessary. In this example, a case where the mandrel M integrally includes a cylindrical part m1 at the middle, a dome part m2 continuing to both left and right ends of the cylindrical part m1, and a mouth part arranged in a projecting manner at the apex of the dome part m2 will be described, as shown in Fig. 2. The fiber bundle R includes a bundle of glass fiber or carbon fiber, where a thermosetting resin material is impregnated in advance in the fiber bundle R wound around the creel. The fiber bundle R fed from the creel may be supplied to the helical winding device after being impregnated with resin.

The supporting board 2 is configured by a base 8 moved and guided by a pair of front and back rails 7 of the mount 1, supporting arms 9, 9 arranged in an upstanding manner at both side ends of the base 8, a chuck 10 arranged on opposing faces at the upper ends of the supporting arms 9, 9, and the like. A pair of attachment jigs 11 is fixed on the left and right sides of the mandrel M. These attachment jigs 11 are gripped and fixed by the chuck 10 so that the mandrel M is supported between the left and right supporting arms 9, 9. One chuck 10 is rotatably driven with a drive structure (not illustrated) to also rotate the mandrel M. The supporting arms 9, 9 are assembled so as to be able to be laid down from the standing orientation to the laid orientation with respect to the base 8 to facilitate the replacement of the mandrel M.

The hoop winding device is configured by a frame 15 moved and guided by a rail 14 of the mount 1, a disc-shaped wrapping table 16 supported in a freely rotating manner by the frame 15, a drive mechanism (not illustrated) which rotatably drives the wrapping table 16, and the like. A plurality of bobbins 17 which supplies the fiber bundle in hoop winding is arranged at equal interval along the peripheral edge of the table on one side of the wrapping table 16. A circular opening which allows the reciprocating movement of the mandrel M is formed at the middle of a plate surface of the wrapping table 16. With the opening surface of the opening and the mandrel M being orthogonal to each other, the entire hoop winding device is reciprocated while rotatably driving the wrapping table 16 so that a hoop wound layer can be formed on a circumferential surface of the mandrel M.

In Figs. 2 to 4, the helical winding device is configured by a fixed frame 20 arranged upstanding on the mount 1, a helical winding head 21 supported by the fixed frame 20, a guide roller 22 which changes the direction and guides the group of fiber bundle towards the helical winding head 21, and the like. A circular opening 20a allowing the reciprocating movement of the mandrel M is formed at the middle of a plate surface of the fixed frame 20 (see Fig. 1), and the guide roller 22 is arranged at a plate surface of the circumference of the opening 20a. The fiber bundle R supplied from the fiber bundle supply structure is guided towards the helical winding device by a direction-changing roller 23 arranged on both front and back sides of the fixed frame 20, and then fed to the helical winding head 21 through a tension adjustment structure 24 and the guide roller 22.

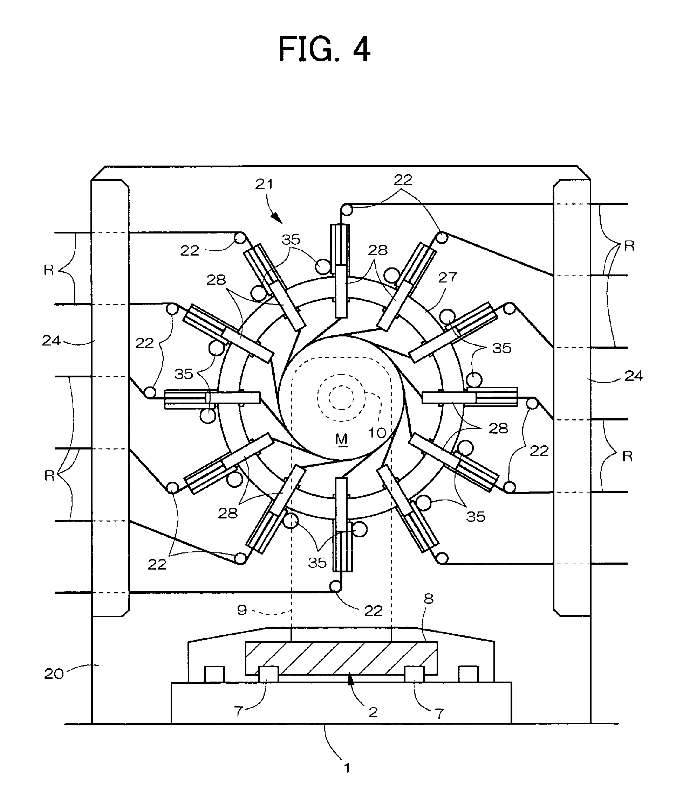

The helical winding head 21 is configured by a guide ring 27 fixed to a circumferential edge wall on one side of the opening 20a, a group of guide tubes 28 radially arranged at equal interval along the circumferential direction of the guide ring 27, and a tube operation mechanism which reciprocates the guide tube 28 in a radial direction. As shown in Fig. 4, the fiber bundle R passed through the tension adjustment structure 24 is moved and guided to the group of guide tubes 28 through the guide roller 22. In this example, the number of guide tubes 28 attached to the guide ring 27 is limited to twelve to simplify the drawing, but actually, a several dozens to a hundred and several tens of the group of guide tubes 28 are attached to the guide ring 27. The appropriate number of fiber bundle R in carrying out helical winding is calculated with the diameter dimension of the mandrel M, as well as the winding width and the winding angle of the fiber bundle R as variables.

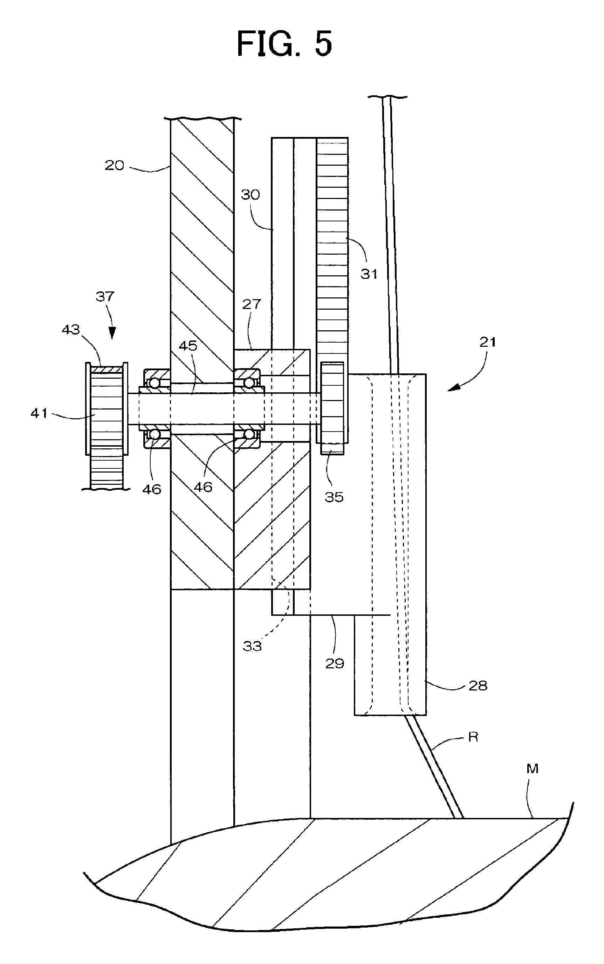

The guide tube 28 includes a linear round tube, and is supported in a freely reciprocating and sliding manner in the radial direction by the guide ring 27 by way of a tube holder 29 integrally arranged with the guide tube 28. As shown in Fig. 5, the tube holder 29 includes a metal block which is long in an up and down direction, where the guide tube 28 is fixed at one side end, and a slide frame 30 having a trapezoidal cross-section is integrally formed at the other side end. A rack 31 which is long in the up and down direction is fixed on a rear surface side of the tube holder 29. The slide frame 30 is supported in a freely reciprocating and sliding manner by a radial guide groove 33 arranged in the guide ring 27, so that the guide tube 28 can advance and retreat and then slide in the radial direction with the tube holder 29.

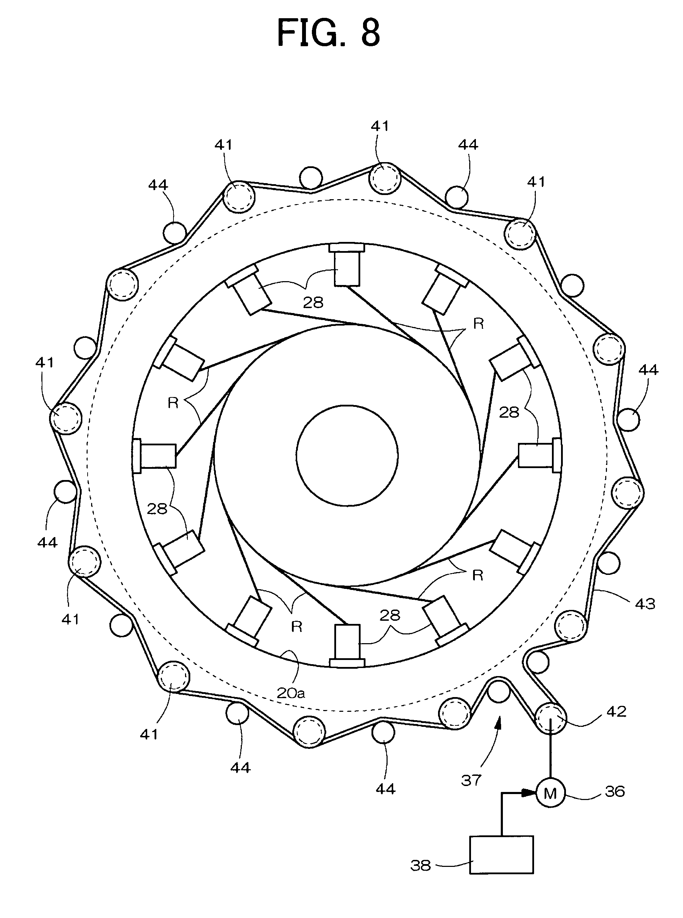

The tube operation mechanism is arranged between the fixed frame 20 and the tube holder 29 to perform sliding operation of the guide tube 28. The tube operation mechanism in Figs. 5 to 7 is configured by the rack 31, a pinion 35 which gears with the rack 31, a power transmission mechanism 37 which transmits the rotational power of a motor 36 simultaneously to the group of pinions 35, a control circuit 38 (Fig. 8) which controls a drive state of the motor 36, and the like.

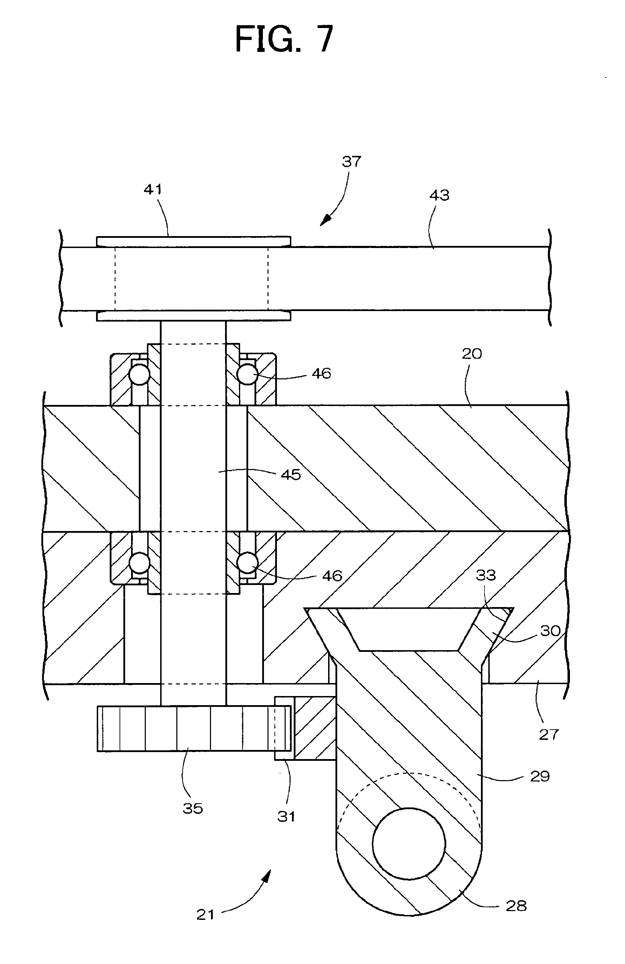

As shown in Fig. 8, the power transmission mechanism 37 is configured by a group of timing gears 41 arranged in correspondence to each pinion 35, a drive gear 42 which outputs rotational power of the motor 36, a timing belt 43 wrapped around the gears 41, 42, and the like. A guide pulley 44 is axially supported in a freely rotating manner between the timing gears 41 adjacent in the circumferential direction. The pinion 35 and the timing gear 41 are fixed to both ends of a gear shaft 45 passing through the fixed frame 20 in a thickness direction. The gear shaft 45 is supported in a freely rotating manner by a bearing 46 attached to the fixed frame 20 (see Fig. 7). Therefore, the group of pinions 35 is simultaneously driven by normally driving or reversely driving the motor 36, thereby sliding the tube holder 29 in a direction of moving closer to the mandrel M or in a direction of moving away from the mandrel M.

Basic data such as the diameter of the mandrel M, the length of the cylindrical part m1, and the curved shape of the dome part m2 are input in advance to the control circuit 38. With the progress of the winding process, the total thickness data of the hoop wound layer formed around the mandrel M, the total thickness data of the helical wound layer, and the like are stored in the control circuit 38. The control circuit 38 controls a drive state of the motor 36 in relation to the above basic data and the progress state of the winding operation of the fiber R around the mandrel M.

The winding operation of the winding apparatus will be described below. When carrying out hoop winding, the wrapping table 16 is positioned at one side end of the cylindrical part m1 of the mandrel M, and the fiber bundle R fed from each bobbin 17 is fixed to the surface of the mandrel M with an adhesive tape. In this state, the frame 15 is moved towards the other side end of the cylindrical part m1 of the mandrel M while rotatably driving the wrapping table 16 to form a first hoop wound layer H1. Subsequently, the frame 15 is invert moved to the one side end (winding start end side) of the cylindrical part m1 of the mandrel M to form a second hoop wound layer H1. When further forming the hoop wound layer H1, the winding process is performed similar to the above for the necessary number of times.

When forming a helical wound layer H2 on an outer surface of the hoop wound layer H1, the hoop winding device is retreated to one side end of the mount 1, as shown in Fig. 2. The supporting board 2 is moved so that a basal end of the mouth part of the mandrel M faces the inner surface of the guide ring 27 of the helical winding device, and the fiber bundle R pulled out from each guide tube 28 is fixed to a circumferential surface of the mouth part with the adhesive tape. In this state, the supporting board 2 is moved at a constant speed while rotatably driving the chuck 10 and the mandrel M to form a helical wound layer H2 on the outer surface of the hoop wound layer H1, as shown in Fig. 3.

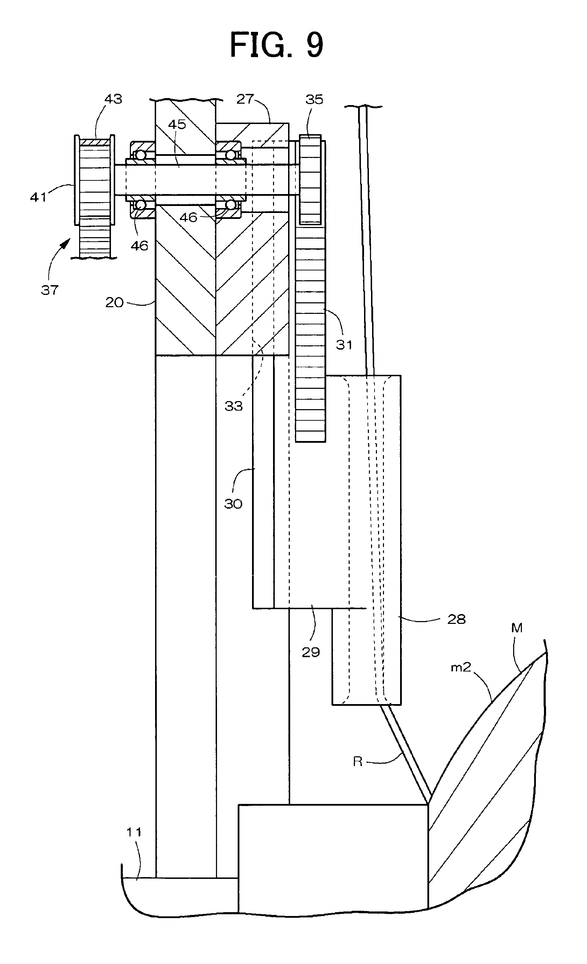

In the process of forming the helical wound layer H2, the tube holder 29 is projected and retreated with the tube operation mechanism to supply the fiber bundle R to the cylindrical part m1 and the dome part m2 of the mandrel M under the same condition. In a state of winding the fiber bundle R around the cylindrical part m1 of the mandrel M, the tube holder 29 is held in a standby state shown in Figs. 1 and 5, and an appropriate amount of spacing is ensured between the guide tube 28 and the mandrel M. In a state of winding the fiber bundle R around the dome part m2 in continuation to the cylindrical part m1, the motor 36 is driven to move the tube holder 29 in a direction of moving closer to a circumferential surface of the dome part m2, and an appropriate amount of spacing is ensured between the guide tube 28 and the mandrel M, as shown in Fig. 9.

Furthermore, in cooperation with the movement of the mandrel M in the opposite direction, the motor 36 is reversely driven to move the tube holder 29 in a direction of moving away from the circumferential surface of the dome part m2. Thus, in a state where the guide tube 28 faces the cylindrical part m1, the tube holder 29 returns to the standby state described above, and an appropriate amount of spacing is again ensured between the guide tube 28 and the mandrel M. Thereafter, a helical wound layer H2 of a predetermined thickness is formed on the outer surface of the hoop wound layer H1 by repeatedly performing the above operations.

The movement trajectory of the guide tube 28 can be set to a curved line form lying along the outer contour line of the dome part m2 by matching the spacing of the guide tube 28 and the mandrel M at the cylindrical part m1 and the spacing of the guide tube 28 and the mandrel M at the dome part m2. For instance, the movement trajectory of the guide tube 28 is a partial circular arc shape if the dome part m2 is a semispherical shape. The diameter dimension of the cylindrical part m1 of the mandrel M gradually becomes larger with the progress of the winding process. In correspondence to the increase in the diameter dimension of the cylindrical part m1, the holding position of the guide tube 28 in the standby state can be gradually shifted radially outward.

After the series of helical winding processes are terminated, the fiber bundle R is cut and the cut end is fixed to the mouth part with the adhesive tape. Therefore, after alternately performing the hoop winding and the helical winding in the above manner, the mandrel M is detached from the supporting board 2 and the heating process is conducted to cure the resin impregnated in the fiber bundle R, thereby obtaining a pressure container including the reinforcement layer and the mandrel M.

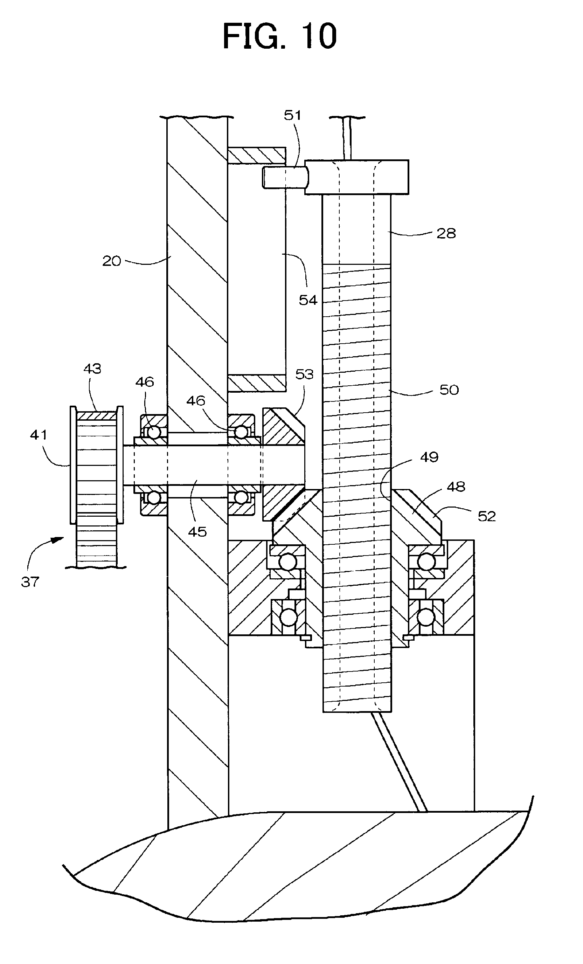

Fig. 10 shows another example of the tube operation mechanism. The tube operation mechanism is configured by a female screw body 48 rotatably driven with the power transmission mechanism 37, a screw shaft 50 arranged at a tube circumferential surface of the guide tube 28 and screwed into a screw hole 49 of the female screw body 48, pin-shaped rotation regulating body 51 which stops the rotation of the guide tube 48, and the like. The female screw body 48 is supported in a freely rotating manner with the guide ring 27, and an umbrella gear 52 is integrally formed at the upper surface thereof. The umbrella gear 52 gears with an umbrella gear 53 fixed to the gear shaft 45 in the above example. The rotation regulating body 51 is fixed at the upper end of the guide tube 28, the projecting end of which being engaged to a vertically long hook groove 54 formed in the fixed frame 20. Others are the same as the above example, and thus the same reference numerals are denoted for the same members, and the description thereof will be omitted.

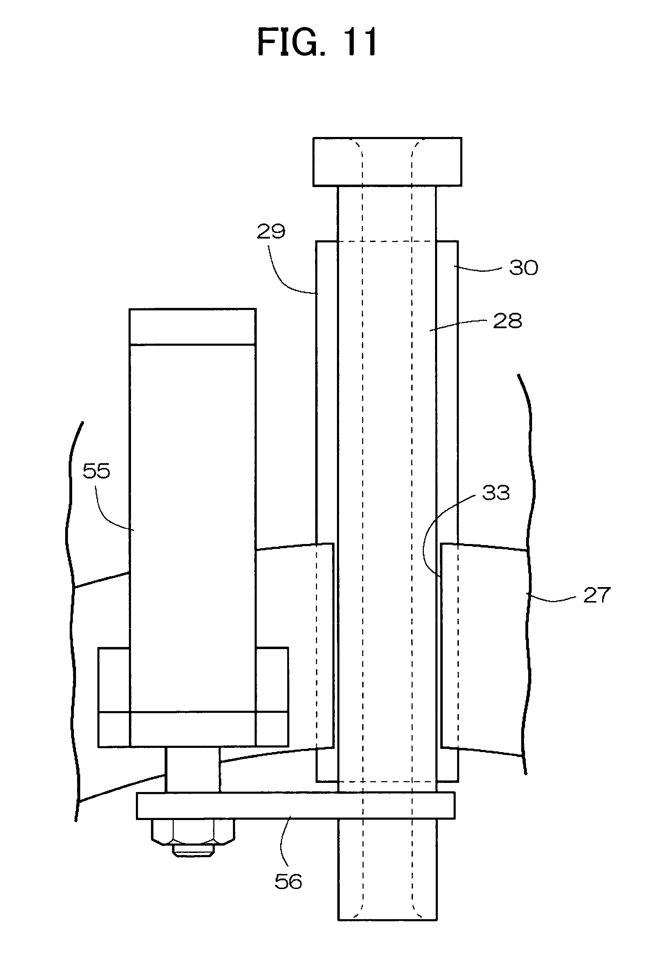

Fig. 11 shows another further example of the tube operation mechanism. The tube operation mechanism is configured by an air cylinder 55, and the individual guide tube 28 is projected and retreated with the air cylinder 55. The air cylinder 55 is attached to the guide ring 27 in an inverted orientation, and coupled to the guide tube 28 by way of a coupling plate 56 fixed at the lower end of a piston rod. If the tube operation mechanism is configured with the air cylinder 55 as in this case, the guide tube 28 can be rapidly projected and retreated so that the response speed can be enhanced, and the fiber bundle R can be efficiently wound by that much. In this example, the tube operation mechanism is arranged between the guide ring 27 and the guide tube 28.

In the above example, the drive state of the motor 36 is controlled based on the shape data of the mandrel M input to the control circuit 38, as well as, the total thickness data of the hoop wound layer and the helical wound layer, and the like, but it is not necessary. For instance, the drive state of the motor 36 may be controlled based on an output signal from a sensor contacting the circumferential surface of the mandrel M. The change in shape of the mandrel M may be detected with a non-contacting sensor. If necessary, the guide tube may be projected and retreated at the cylindrical part to change the supply position of the fiber bundle R.
While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. A filament winding apparatus comprising a supporting board supporting a mandrel integrally including a cylindrical part at a middle and a dome part continuing to both ends of the cylindrical part, and a helical winding head supplying and guiding a fiber bundle towards the mandrel, wherein
the helical winding head includes a guide ring concentrically supported at a periphery of the mandrel, a group of guide tubes radially arranged along a circumferential direction of the guide ring, and a tube operation mechanism reciprocating the guide tube along a tube axis center direction; and
the guide tube is operated to move closer towards a circumferential surface of the dome part with the tube operation mechanism when the guide tube is facing the dome part of the mandrel.

2. The filament winding apparatus according to claim 1, wherein a movement trajectory upon the guide tube being operated to move closer to the circumferential surface of the dome part with the tube operation mechanism is set to a curved line form along an outer contour line of the dome part of the mandrel.

3. The filament winding apparatus according to claim 1 or 2, wherein
a circular opening allowing reciprocating movement of the mandrel is formed in a fixed frame arranged upstanding and fixed on a mount, the guide ring being fixed to a circumferential edge wall of the opening;
a tube holder arranged on the guide tube is supported in a freely reciprocating sliding manner by a guide groove formed in the guide ring; and
the tube operation mechanism is arranged between the fixed frame and the tube holder.

4. The filament winding apparatus according to claim 1, wherein the tube operation mechanism is configured including a rack arranged on the tube holder, a pinion gearing with the rack, a power transmission mechanism transmitting a rotational power of a motor to a group of pinions, and a control circuit controlling a drive state of the motor.
